# EUROPÄISCHE PATENTSCHRIFT

(11) **EP 3 760 296 B1**
(45) Veröffentlichungstag und Bekanntmachung des Hinweises auf die Patenterteilung: **10.11.2021**
(21) Anmeldenummer: 20177339.7
(22) Anmeldetag: 29.05.2020
(51) Int. Cl.: B01D 45/02, B01D 45/04

(54) **VORRICHTUNG ZUM FILTERN VON PARTIKELN**
DEVICE FOR FILTERING PARTICLES
DISPOSITIF DE FILTRAGE DE PARTICULES

(30) Priorität: 03.07.2019 AT 506042019
(43) Veröffentlichungstag der Anmeldung: 06.01.2021
(73) Patentinhaber: Universität Linz, 4040 Linz (AT)
(72) Erfinder: Stadler, Anna Theresia, 4020 Linz (AT); Krieger, Michael, 4040 Linz (AT)
(74) Vertreter: Hübscher & Partner Patentanwälte GmbH

(56) Entgegenhaltungen:
- US-A- 4 509 962
- US-A- 5 039 317
- US-A1- 2009 139 398
- US-A1- 2015 198 090

## Beschreibung

Die Erfindung bezieht sich auf eine Vorrichtung zum Filtern von Partikeln mittels Trägheits- und Schwerkraftabscheidung, mit einer sich zwischen einem Einlass und einem Auslass erstreckenden, eine Abscheidekammer aufweisenden Filtereinheit.

Aus dem Stand der Technik sind Filtervorrichtungen bekannt (US20160312698A1), die aufgrund des Prinzips der Trägheitsabscheidung funktionieren. Die Abscheidung erfolgt in solchen Vorrichtungen ausschließlich über ein Umlenken des Luftstroms, wodurch die zu filternden Partikel vom Auslass für das gereinigte Fluid weg, und in spezielle Abscheidekammern oder Kanäle umgelenkt werden. Der Vorteil solcher Filtervorrichtungen ist, dass keine komplexen oder wartungsintensiven Bauteile wie Membranen oder Filter verbaut werden müssen, wodurch sich der Verschleiß oder die Notwendigkeit Komponenten auszutauschen verringert. Der wesentliche Nachteil solcher Systeme besteht jedoch darin, dass bei dieser Bauweise hinreichend große Trägheitskräfte wirken müssen, welche durch die Strömungsgeschwindigkeiten und/oder die Masse der abzuscheidenden Partikel erzielt werden. Dies macht Filter nach einer in der US20160312698A1 vorgeschlagenen Bauart unpraktisch für Bedingungen, in denen keine großen Kräfte vorherrschen, wie beispielsweise beim Filtern von Feinstaub aus Luft. In diesem Fall würde eine Filteranlage mit Trägheitsabscheidung verhältnismäßig große Dimensionen benötigen um durch die geringe Relativbewegung der abzuscheidenden Partikel vom sauberen Luftstrom ausreichend effektiv zu filtern. Zwar existieren ebenfalls Filter auf Trägheitsabscheidungsbasis, bei denen der Einlass, die Abscheidekammer und der Auslass in Serie geschaltet sind und ohne spezielle Auffangkammern funktionieren (US20030150198A1), in diesen sind die abgeschiedenen Partikel jedoch verhältnismäßig groß und daher träge und dadurch nicht zur Abscheidung von Feinstaub geeignet. Außerdem sind die Partikel sehr anfällig dafür, wieder in den Fluidstrom ein- und über den Auslass auszutreten. Um dieses Problem zu lösen wird in der US20030150198A1 wieder eine separate, parallele Abscheidekammer vorgeschlagen, was zeigt, dass eine reine Reihenschaltung des Einlasses, der Abscheidekammer und des Auslasses keine zufriedenstellende Lösung bereithält.

Eine verbreitete Alternative, speziell für Partikel geringer Masse, wäre der Einsatz von Filteranlagen mit Membranen, mechanischen Filtern oder ähnlichem. Diese sind jedoch wegen ihrem Aufbau und ihrer Wartungsintensität unpraktisch und weniger wirtschaftlich, da der Filter regelmäßig ausgebaut und danach gereinigt oder getauscht werden muss, was mehr Arbeits- und Materialaufwand mit sich bringt.

Der Erfindung liegt somit die Aufgabe zugrunde, ein einfach aufgebautes Filtersystem so auszugestalten, dass selbst bei geringen Flussgeschwindigkeiten und Partikelmassen ein Abscheiden kleiner Partikel im Feinstaubbereich ermöglicht wird, bei dem Verschleißteile vermieden und der Instandhaltungsaufwand minimiert werden kann.

Die Erfindung löst die gestellte Aufgabe dadurch, dass sich die in einer Hauptströmungsrichtung erstreckende Abscheidekammer im Querschnitt vom Einlass mit ellipsenförmigem Querschnitt erweitert und in Richtung Auslass nacheinander einen Abschnitt mit asymmetrisch-ovalem Querschnitt und einen Abschnitt mit nierenförmigem Querschnitt aufweist und dass der Auslass gegenüber dem Einlass lateral versetzt ist. Der ellipsenförmige Einlass kann rund ausgeführt sein. Der Querschnitt der Abscheidekammer vergrößert sich vom Einlass in Richtung Auslass, sodass sich ein Diffusor ausbildet. Die spezielle Form der Abscheidekammer ermöglicht bei geringen Strömungsgeschwindigkeiten und Partikelmassen eine effektive Abscheidung ohne zusätzliche Bauteile, da die geometrische Ausgestaltung und die Querschnittsänderungen entlang der Abscheidekammer dazu führen, dass beim Einströmen des Fluids in der Abscheidekammer Querströmungen hervorgerufen werden, die die abzuscheidenden Partikel an die Innenwand der Abscheidekammer transportieren. Solange der Fluidstrom aufrecht bleibt, verhindert dies, dass Partikel wieder in den Fluidstrom eintreten und dadurch über den Auslass entweichen können. Die Filtrierung unterschiedlich großer Partikel findet an verschiedenen Positionen entlang der Hauptströmungsrichtung in der Abscheidekammer statt, wobei gilt, dass größere Partikel schneller von den Querströmungen erfasst werden, und kleinere Partikel eine längere Strecke in der Abscheidekammer durchlaufen und daher näher am Auslass abgeschieden werden. Dadurch ergibt sich ein Zusammenhang zwischen der Dimensionierung der Abscheidekammer und der minimalen filterbaren Partikelgröße, wobei Versuche mit verschiedenen Dimensionierungen für die Vorrichtung gezeigt haben, dass sich Feinstaub mit einer Partikelgröße von 5,5 Mikrometern und einer Dichte von ca. 1000kg/m³ beispielsweise bei einer Strömungsgeschwindigkeit von 0,1m/s nach etwa 5 mm Weglänge in einer Abscheidekammer mit einer Länge von ca. 6,5mm und einer maximalen Höhe von circa, 0,5 mm absetzt. Die Konstruktionsweise des Filters ermöglicht also eine Filterung von Partikeln geringer Trägheit, wie beispielsweise Feinstaub, aus einem Fluid, wie beispielsweise Luft, ohne den Einsatz mechanischer Filter, Membranen, Düsen, oder ähnliches. Die Abscheidung erfolgt ausschließlich durch das Durchströmen der Abscheidekammer und die in ihr auftretenden Kräfte, sowie ohne die Notwendigkeit einer gesonderten Auffangkammer. Hierbei liegen weitere wesentliche Vorteile in der geringen Dimensionierung des Kanals und seiner Funktionalität bei geringen Strömungsgeschwindigkeiten in der Größenordnung von wenigen Dezimetern pro Sekunde. Des Weiteren gestaltet sich die Reinigung des Filters vorteilhaft: Hierzu wird einfach die Fluidstromrichtung umgekehrt, sodass ein kurzer Reinigungsfluidstrom mit starker Strömungsgeschwindigkeit am Auslass aufgegeben wird, und die gesammelten Partikel über den Einlass gesammelt werden können.

Spezielle Geometrien der Vorrichtung beeinflussen zusätzlich die Filtereigenschaften. Eine besonders effiziente Filtrierung erhält man überraschenderweise dadurch, dass die Abscheidekammer in Hauptströmungsrichtung über den Auslass hinaus zu einer Strömungskammer verlängert ist. In dieser Ausführungsform ist die Strömungskammer eine weitere Komponente der Filtereinheit. Diese Strömungskammer ist als asymmetrischer Kegel ausgestaltet, dessen offene Basis mit der Abscheidekammer verbunden ist, sodass die Strömungskammer eine Ausstülpung der Abscheidekammer bildet. Im Fluidstrom befindliche Partikel durchqueren oder akkumulieren sich nicht in der Strömungskammer, es hat sich jedoch herausgestellt, dass bei ansonsten gleichen Dimensionierungen der anderen Komponenten der Vorrichtung und gleicher Dichte der Partikel das Vorhandensein der Strömungskammer die minimale abscheidbare Partikelgröße, auf 5 Mikrometer herabsenkt, wobei sich dieser Effekt ausschließlich auf eine Änderung des Strömungsprofils in der Abscheidekammer zurückführen lässt.

Strömungssimulationen haben hinsichtlich der Anordnung der Strömungskammer gezeigt, dass sich das Abscheideverhalten noch verbessert, wenn die Abscheidekammer im Bereich des Abschnittes mit nierenförmigem Querschnitt zwei von einer Einbuchtung voneinander getrennte Strömungsbereiche umfasst, wobei der eine in den Auslass und der zweite in die Strömungskammer mündet.

Um die Strömungsgeschwindigkeiten in der Abscheidekammer besser zu regulieren, wird vorgeschlagen, dass dem Einlass eine Düse mit sich zum Einlass hin verringerndem Querschnitt vorgelagert ist. Dies verbessert den Filtrierungsvorgang, da die Düse das Fluid vor dem Eintritt in den Einlass zunächst beschleunigt wird, und zusammen mit der nachfolgenden, als Diffusor wirkende, Verbreiterung des Querschnitts der Abscheidekammer ein verbessertes Einstellen der Querströme in der Abscheidekammer ermöglicht.

Da die Partikel nur während des Filtervorgangs, also während der Durchströmung mit dem Fluid, an die Innenseite der Vorrichtung gedrückt werden, besteht die Möglichkeit, dass sich bei Abschwächung oder gar Unterbrechung des zu filternden Fluidstroms gefilterte Partikel von der Innenseite lösen und über den Auslass entweichen können. Es ist daher notwendig, die gefilterten Partikel unabhängig vom Fluidstrom zu fixieren. Dies kann dadurch erreicht werden, dass die Abscheidekammer auf ihrer Innenseite wenigstens abschnittsweise eine adhäsive Oberfläche aufweist. Der Oberflächenabschnitt kann beispielsweise durch eine haftende Beschichtung funktionalisiert werden, um nach der Filtrierung zu gewährleisten, dass die gefilterten Partikel die Vorrichtung nicht unbeabsichtigt entweichen. Bei einer Reinigung der Vorrichtung können die haftenden Partikel anschließend ausgeblasen werden. Die Haftstärke an diesem Oberflächenabschnitt muss so ausgestaltet sein, dass sie beim Reinigen der Vorrichtung durch den kurzen, schnellen Fluidstrom überwunden werden kann, also die Haftung der Partikel an der adhäsiven Oberfläche schwächer ist, als die ausgeübte lösende Kraft des Reinigungsfluidstroms.

Um zusätzlich zum Filtervorgang auch die Reinigung des Filters zu erleichtern, kann die Innenseite der Abscheidekammer wenigstens abschnittsweise elektrostatisch aufladbar sein. Diese elektrostatische Aufladung kann eigenständig oder zusätzlich zu einer adhäsiven Oberfläche eingesetzt werden. Eine elektrostatische Aufladung ist reversibel, das bedeutet, dass die zum Fixieren der Partikel während des Filtervorganges notwendige elektrostatische Aufladung beim Reinigungsvorgang der Vorrichtung einfach abgeleitet werden kann, wodurch die gefilterten Partikel schwächer an der Innenseite der Abscheidekammer haften und einfacher entfernt werden können. Bei einem kombinierten Einsatz mit einer adhäsiven Oberfläche kann die Filterwirkung verbessert werden, ohne dass eine Reinigung der Abscheidekammer aufgrund zu hoher Adhäsionskräfte verhindert oder zumindest erschwert wird.

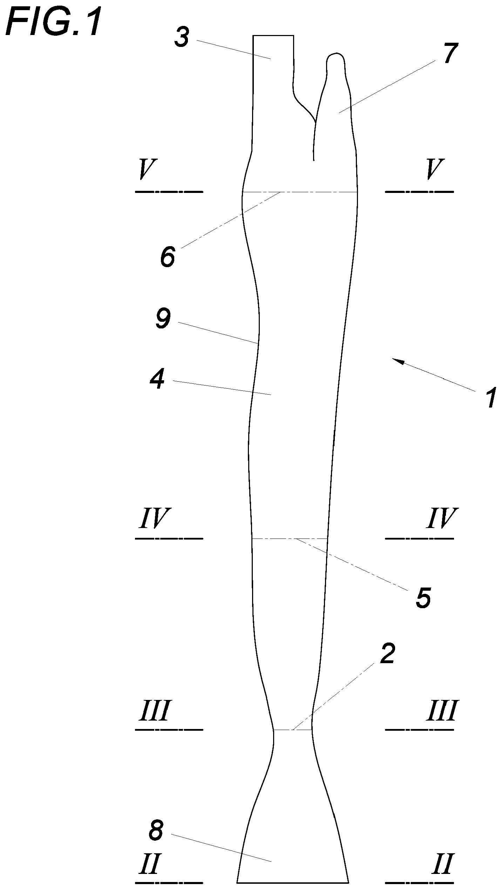

In der Zeichnung ist der Erfindungsgegenstand beispielsweise dargestellt. Es zeigen
- Fig. 1: eine erfindungsgemäße Vorrichtung in einer Seitenansicht,

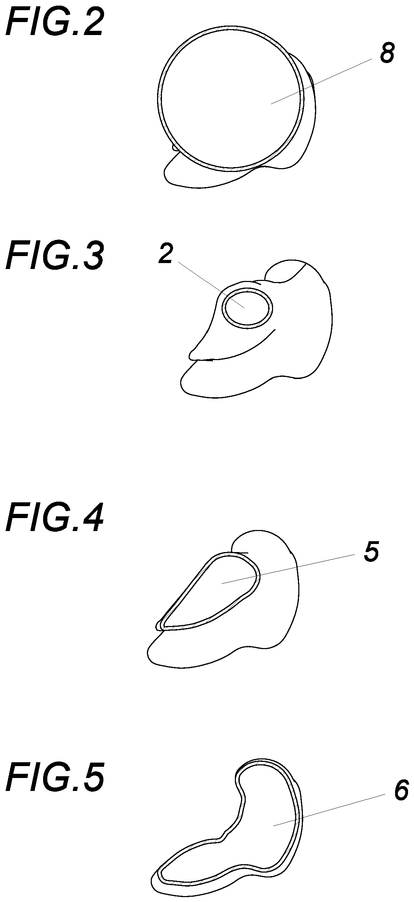

- Fig. 2: einen Schnitt entlang der Linie II - II der Fig. 1 im Bereich der dem Einlass vorgelagerten Düse in einem größeren Maßstab,
- Fig. 3: einen Schnitt entlang der Linie III - III der Fig. 1 im Bereich des Einlasses in einem ebenfalls größeren Maßstab,
- Fig. 4: einen Schnitt entlang der Linie IV - IV der Fig. 1 im Bereich der Abscheidekammer mit asymmetrisch-ovalem Querschnitt in einem ebenfalls größeren Maßstab und
- Fig. 5: einen Schnitt entlang der Linie V - V der Fig. 1 im Bereich der Abscheidekammer mit nierenförmigem Querschnitt in einem ebenfalls größeren Maßstab.

Eine Erfindungsgemäße Vorrichtung umfasst eine Filtereinheit 1, die sich von einem Einlass 2 mit ellipsenförmigem Querschnitt in Strömungsrichtung zu einem Auslass 3 erstreckt. Die Filtereinheit 1 weist dabei eine Abscheidekammer 4 auf, die sich vom Einlass 2 zum Auslass 3 hin zunächst erweitert, einen ersten Abschnitt 5 mit asymmetrisch-ovalem Querschnitt und einen zweiten Abschnitt 6 mit nierenförmigem Querschnitt umfasst und in den Auslass 3 mündet, wobei dieser gegenüber dem Einlass 2 lateral versetzt ist.

In der dargestellten Ausführungsform umfasst die Filtereinheit 1 neben der Abscheidekammer 4 auch eine Strömungskammer 7, die parallel zum Auslass 3 an die Abscheidekammer 4 angesetzt ist. Die beiden, im Bereich des zweiten Abschnittes 6 mit nierenförmigem Querschnitt von einer Einbuchtung voneinander getrennten Strömungsbereiche können dabei vorteilhafterweise einerseits in den Auslass 3 und andererseits in die Strömungskammer 7 münden.

Um die Strömungsbedingungen innerhalb der Abscheidekammer 4 zu verbessern, kann dem Einlass 2 eine Düse 8 mit sich zum Einlass hin verringerndem Querschnitt vorgelagert sein, sodass der Einlass 2 mit seinem ellipsenförmigem, vorzugsweise runden Querschnitt einen flächenmäßig geringeren Querschnitt als die Düse 8 und der sich nach dem Einlass 2 erweiternden Abscheidekammer 4 aufweist.

Um bereits trägheitsbedingt abgeschiedene Partikel auch bei unregelmäßigem oder unterbrochenem Fluidstrom innerhalb der Abscheidekammer 4 halten zu können, kann die Abscheidekammer 4 auf ihrer Innenseite wenigstens abschnittsweise eine adhäsive Oberfläche 9 aufweisen.

Alternativ zu dieser adhäsive Oberfläche 9 kann auch die Innenseite der Abscheidekammer 4 wenigstens abschnittsweise elektrostatisch aufladbar ausgestaltet sein, beispielsweise, in dem die Innenseite selbst eine Elektrode bildet oder aber an der Innenseite eine bündig mit dieser abschließende Elektrode angeordnet ist.

## Patentansprüche

1. Vorrichtung zum Filtern von Partikeln mittels Trägheits- und Schwerkraftabscheidung, mit einer sich zwischen einem Einlass (2) und einem Auslass (3) erstreckenden, eine Abscheidekammer (4) aufweisenden Filtereinheit (1), **dadurch gekennzeichnet, dass** sich die in einer Hauptströmungsrichtung erstreckende Abscheidekammer (4) im Querschnitt vom Einlass (2) mit ellipsenförmigem Querschnitt erweitert und in Richtung Auslass (3) nacheinander einen Abschnitt (5) mit asymmetrisch-ovalem Querschnitt und einen Abschnitt (6) mit nierenförmigem Querschnitt aufweist und dass der Auslass (3) gegenüber dem Einlass (2) lateral versetzt ist.

2. Vorrichtung nach Anspruch 1, **dadurch gekennzeichnet, dass** die Abscheidekammer (4) in Hauptströmungsrichtung über den Auslass (3) hinaus zu einer Strömungskammer (7) verlängert ist.

3. Vorrichtung nach Anspruch 2, **dadurch gekennzeichnet, dass** die Abscheidekammer (4) im Bereich des Abschnittes (6) mit nierenförmigem Querschnitt zwei von einer Einbuchtung voneinander getrennte Strömungsbereiche umfasst, wobei der eine in den Auslass (3) und der zweite in die Strömungskammer (7) mündet.

4. Vorrichtung nach einem der Ansprüche 1 bis 3, **dadurch gekennzeichnet, dass** dem Einlass (2) eine Düse (8) mit sich zum Einlass (2) hin verringerndem Querschnitt vorgelagert ist.

5. Vorrichtung nach einem der vorangegangenen Ansprüche 1 bis 4, **dadurch gekennzeichnet, dass** die Abscheidekammer (4) auf ihrer Innenseite wenigstens abschnittsweise eine adhäsive Oberfläche (9) aufweist.

6. Vorrichtung nach einem der vorangegangenen Ansprüche 1 bis 5, **dadurch gekennzeichnet, dass** die Innenseite der Abscheidekammer (4) wenigstens abschnittsweise elektrostatisch aufladbar ist.

## Claims

1. Apparatus for filtering particles by means of inertial separation and gravity separation, comprising a filter unit (1) which extends between an inlet (2) and an outlet (3) and has a separation chamber (4), **characterised in that** the separation chamber (4) which extends in a main flow direction widens in cross-section from the inlet (2) with an ellipsoidal cross-section and consecutively has in the direction of the outlet (3) a portion (5) with an asymmetrical-oval cross-section and a portion (6) with a kidney-shaped cross-section, and **in that** the outlet (3) is laterally offset with respect to the inlet (2).

2. Apparatus as claimed in claim 1, **characterised in that** the separation chamber (4) is extended in the main flow direction beyond the outlet (3) to a flow chamber (7).

3. Apparatus as claimed in claim 2, **characterised in that** the separation chamber (4) comprises, in the region of the portion (6) with a kidney-shaped cross-section, two flow regions which are separated from each other by a recess, wherein one region issues into the outlet (3) and the second region issues into the flow chamber (7).

4. Apparatus as claimed in any one of the preceding claims 1 to 3, **characterised in that** a nozzle (8) with a cross-section which decreases towards the inlet (2) is located upstream of the inlet (2).

5. Apparatus as claimed in any one of the preceding claims 1 to 4, **characterised in that** the separation chamber (4) has an adhesive surface (9) on at least portions of its inner side.

6. Apparatus as claimed in any one of the preceding claims 1 to 5, **characterised in that** at least portions of the inner side of the separation chamber (4) can be electrostatically charged.

## Revendications

1. Dispositif pour le filtrage de particules par séparation par inertie et par gravité, avec une unité de filtrage (1) s'étendant entre une entrée (2) et une sortie (3) et présentant une chambre de séparation (4), **caractérisé en ce que** la chambre de séparation (4) s'étendant dans une direction d'écoulement principal s'évase en section à partir de l'entrée (2) avec une section ellipsoïdale et présente, se succédant en direction de la sortie (3), un segment (5) avec une section ovale asymétrique et un segment (6) avec une section en forme de haricot, et que la sortie (3) est décalée latéralement par rapport à l'entrée (2).

2. Dispositif selon la revendication 1, **caractérisé en ce que** la chambre de séparation (4) est prolongée dans la direction d'écoulement principal au-delà de la sortie (3) par une chambre d'écoulement (7).

3. Dispositif selon la revendication 2, **caractérisé en ce que** la chambre de séparation (4) comprend dans la zone du segment (6) avec une section en forme de haricot deux zones d'écoulement séparées entre elles par une échancrure, l'une débouchant dans la sortie (3) et la deuxième dans la chambre d'écoulement (7).

4. Dispositif selon une des revendications 1 à 3, **caractérisé en ce qu'**en amont de l'entrée (2) est disposée une buse (8) avec une section se réduisant jusqu'à l'entrée (2).

5. Dispositif selon une des revendications précédentes 1 à 4, **caractérisé en ce que** la chambre de séparation (4) présente sur sa face intérieure, au moins par segments, une surface adhésive (9).

6. Dispositif selon une des revendications précédentes 1 à 5, **caractérisé en ce que** la face intérieure de la chambre de séparation (4) peut, au moins par segments, être chargée en électricité statique.
